# EUROPÄISCHE PATENTANMELDUNG

(11) **EP 1 160 114 A2**
(43) Veröffentlichungstag der Anmeldung: **05.12.2001**
(21) Anmeldenummer: 01110820.6
(22) Anmeldetag: 04.05.2001
(51) Int. Cl.: B60K 15/03, B60K 15/035, B60K 15/077

(54) **Kraftstoffversorgungsanlage für ein Kraftfahrzeug**

(30) Priorität: 02.06.2000 DE 10027568
(71) Anmelder: Bayerische Motoren Werke Aktiengesellschaft, 80809 München (DE)
(72) Erfinder: Wissenbach, Georg, 82335 Aufkirchen (DE)

(57) **Zusammenfassung**

Die Erfindung betrifft eine Kraftstoffversorgungsanlage für ein Kraftfahrzeug, mit einem Tank (1) zur Aufnahme von flüssigem Kraftstoff, mit einer darin angeordneten Kraftstoffpumpe mit Schwalltopf, Filter und Füllstandsgeber, sowie mit einem Ausgleichsvolumen (7), einem Zwischenspeicher für gasförmige Kraftstoffbestandteile und den zugehörigen Verbindungsleitungen, u.a. auch zu einer mit dem Kraftsoff zu versorgenden Brennkraftmaschine. Erfindungsgemäß ist der Tank aus zumindest zwei gasdicht unlösbar miteinander verbundenen Formteilen (1a,1b) zusammengesetzt, woran die Verbindungsleitung(en) (5) zur Brennkraftmaschine lösbar angeschlossen sind, während die weiteren genannten Elemente vor dem endgültigen Zusammenfügen der Formteile in den dadurch gebildeten Tank-Innenraum eingebaut sind. Neben den genannten Elementen können ein Druckregler und/oder eine Saugstrahlpumpe und/oder ein Rückhalte- oder Überlastventil im Tankinnenraum angeordnet sein, ferner kann ein Tank-Füllrohr lösbar am Tank anschließbar oder unlösbar mit einem der Tank-Formteile verbunden sein. Bevorzugt sind der Tank selbst sowie die angeschlossenen Verbindungsleitungen und Rohre in Edelstahl ausgeführt.

## Beschreibung

Die Erfindung betrifft eine Kraftstoffversorgungsanlage für ein Kraftfahrzeug, mit einem Tank zur Aufnahme von flüssigem Kraftstoff, mit einer darin angeordneten Kraftstoffpumpe mit Schwalltopf, Filter und Füllstandsgeber, sowie mit einem Ausgleichsvolumen, einem Zwischenspeicher für gasförmige Kraftstoffbestandteile und den zugehörigen Verbindungsleitungen, u.a. auch zu einer mit dem Kraftstoff zu versorgenden Brennkraftmaschine. Zum technischen Umfeld wird beispielshalber auf die DE 195 08 978 A1 oder die DE-OS 24 40 904 verwiesen.

Eine moderne Kraftstoffversorgungsanlage zur Versorgung des Kraftstoff-Einspritzsystems einer Brennkraftmaschine eines Kraftfahrzeuges, insbesondere Personenkraftwagens mit Ottomotor, umfaßt einen Kraftstoffbehälter oder Tank mit einem sog Schwall- oder Sammeltopf, eine elektrische Kraftstoffpumpe, einen oder mehrere Füllstandsgeber, Kraftstoff-Rückhalteventile, sowie innenliegende und außenliegende Förderleitungen und Entlüftungs-Leitungen. Dabei sind bekannte Tankbauarten je nach Ausführung mit einer oder zwei Montageöffnungen versehen, durch die die genannten Komponenten eingebaut werden und die danach mit wieder lösbaren Verschlußdeckeln verschlossen werden.

Im bekannten Stand der Technik außerhalb des Kraftstoffbehälters sind im Fahrzeug bzw. Personenkraftwagen üblicherweise ein Füllrohr zum Befüllen des Tanks, ein (Druck-)Ausgleichsvolumen oder Ausgleichsbehälter, zumeist mit einem sog. Roll-Over-Ventil versehen, ein Aktivkohlefilter, welches Bestandteil einer Tank-Entlüftungsanlage ist und in dem gasförmige Kraftstoffbestandteile zwischengespeichert werden können, sowie eine zugehörige Spülleitung. Auch ein Kraftstoff- Druckregler sowie ein Kraftstoff-Hauptfilter oder Feinfilter, sowie die zugehörigen Förderleitungen sowie Be- und Entlüftungsleitungen mit den erforderlichen Schlauchverbindungen sowie zugehörigen Leitungsanschlüssen befinden sich (teilweise zwangsläufig) außerhalb des Tanks, ebenso Trag-, Befestigungs- und Schutzteile für die jeweiligen Komponenten.

Zumindest die genannten kraftstoff-führenden oder diesen enthaltenden Komponenten müssen emissionsdicht, d.h. sowohl flüssigkeitsdicht als auch gasdicht sein, und zwar zum Schutz der Umwelt sowie zur Erfüllung gesetzlicher Vorschriften, im Rahmen derer auch eine Leckerkennungseinrichtung mit zugehöriger Ladepumpe, Staubfilter und zugehöriger Anzeige verbaut sein kann.

In den letzten Jahren werden weltweit zunehmend im Blasverfahren hergestellte Kunststoff-Kraftstoffbehälter eingesetzt. Bei Personenkraftwagen sind sie meist im Unterflurbereich des Fahrzeugs angeordnet, während die sich außerhalb des Tanks befindenden Komponenten über sog "freie" Räume im Fahrzeug-Unterbodenbereich verteilt sein können, bspw. auch in ausgeweiteten Radhäusern. Um dabei zu Reparaturzwecken oder dgl. an die im Tank verbauten und nach Entfernen des genannten Verschlußdeckels zugänglichen Komponenten herankommen zu können, sind in der Fahrzeug- Karosserie geeignete Montage-Handlöcher oder dgl. erforderlich.

Aus der bisherigen Schilderung ergibt sich, daß eine Vielzahl einzelner Komponenten in teilweise aufwendiger Weise am Fahrzeug bzw. an der Fzg.-Karosserie montiert werden müssen, die dann teilweise ungeschützt von der Karosserie abstehen können. Erforderlich ist demzufolge auch eine hohe Anzahl bzw. große Länge von Verbindungsleitungen zwischen den verstreut liegenden Komponenten. Folglich sind viele Leitungsanschlüsse und Leitungs-Verbindungsstellen außerhalb des Kraftstofftanks vorhanden, die ebenso wie die angesprochenen Montageöffnungen im Kraftstofftank in aufwendiger Weise hergestellt und abgedichtet werden müssen, da zunehmend höhere Dichtigkeitsanforderungen bezüglich einer Kfz.-Kraftstoffversorgungsanlage bestehen, d.h. jegliche Kraftstoffverdunstung in die Umgebung soll ausgeschlossen sein.

Eine im Hinblick hierauf verbesserte Kraftstoffversorgungsanlage aufzuzeigen, ist Aufgabe der vorliegenden Erfindung.
Die Lösung dieser Aufgabe ist dadurch gekennzeichnet, daß der Tank aus zumindest zwei gasdicht unlösbar miteinander verbundenen Formteilen zusammengesetzt ist, woran die Verbindungsleitung(en) zur Brennkraftmaschine lösbar angeschlossen sind, während die weiteren im Oberbegriff des Anspruchs 1 genannten Elemente vor dem endgültigen Zusammenfügen der Formteile in den dadurch gebildeten Tank-Innenraum eingebaut sind. Vorteilhafte Aus- und Weiterbildungen sind Inhalt der Unteransprüche.

Erfindungsgemäß kann die Anzahl der an einer Kraftstoffversorgungsanlage vorhandenen Dichtstellen auf unter 35% der heute üblichen Ausführung reduziert werden, indem Leitungsverbindungen und Dichtstellen entfallen, wenn ein Großteil der Komponenten einer Kraftstoffversorgungsanlage innerhalb des Kraftstoffbehälters, d.h. im Tank-Innenraum angeordnet sind. Diese Komponenten werden dabei bei der Fertigung des bspw. aus einer Oberschale sowie einer Unterschale zusammengesetzten Tanks im Tank-Innenraum angeordnet, wonach diese Ober- und Unterschale bzw. allgemein die mehreren, den Tank bildenden Formteile, unlösbar und absolut gasdicht miteinander verbunden werden. Selbstverständlich müssen dann die im Tank-Innenraum angeordneten Komponenten hinsichtlich ihrer Lebensdauer auf die Lebensdauer Kraftfahrzeugs ausgelegt werden, da sie bei Ausfall nicht einzeln austauschbar sind. Andererseits bzw. vorteilhafterweise ist eine Flüssigkeitsdichtheit oder Emissionsdichtheit dieser Komponenten nur dann erforderlich, wenn sich andernfalls eine Funktionsbeeinträchtigung ergeben würde, da diese Komponenten nunmehr erfindungsgemäß in einem absolut dichten Kraftstoffbehälter angeordnet sind.

In anderen Worten ausgedrückt wird vorgeschlagen, die gesamte Kraftstoffversorgungsanlage (nach dem Oberbegriff des Anspruchs 1) zu wenigen Funktions- oder Montagemodulen zusammenzulegen. Je geringer die Anzahl der letztlich verbleibenden Module ist, desto geringer sind mögliche Emissionen von Kraftstoffbestandteilen sowie der beim Einbau der Kraftstoffversorgungsanlage in das Kraftfahrzeug anfallende Montageaufwand. Vorteilhafterweise steigt durch diese Modulbauweise die ertragbare Crashbelastung des Kraftfahrzeuges.

In einer bevorzugten Ausführungsform können drei sog. Moduleinheiten vorgesehen sein, nämlich erstens ein Kraftstoffbehälter oder Tank mit einer Vielzahl von integrierten bzw. innenliegenden, für die Funktion der Kraftstoffversorgungsanlage wesentlichen Komponenten, zweitens eine oder ggf. mehrere, dann in Form eines Paketes oder dgl. vorliegenden Verbindungsleitung(en) zwischen dem Kraftstoff-Tank sowie der mit dem darin befindlichen (bevorzugt flüssigen) Kraftstoff zu versorgenden Kfz.-Brennkraftmaschine, und drittens ein Kraftstoff-Füllrohr mit einer lösbaren Anschlußstelle zum Kraftstofftank und mit einem handbetätigtem oder automatischem Tankverschluß.

In einer noch weiter komprimierten Ausführungsform sind nur zwei Moduleinheiten erforderlich, nämlich wenn das Füllrohr mit dem Kraftstoffbehälter bzw. mit einem sog. Formteil desselben fest verschweißt oder fest verbunden wird bzw. ist. Andernfalls ist nicht nur das Füllrohr, sondern es sind (bei sämtlichen Ausführungsformen) die Verbindungsleitungen zwischen dem Tank bzw. Tank-Modul und der Kfz.-Brennkraftmaschine lösbar am Tank angeschlossen, um einen ggf. erforderlichen Austausch desselben so einfach wie möglich zu gestalten. Bevorzugt sind dabei die lösbar an den Tank anschließbare(n) Verbindungsleitung(en) und/oder Rohr(e) (nämlich ggf. das Füllrohr) mit einer Vorrichtung zum Ausgleich von geringfügigen Lageänderungen versehen.

Generell sind die einzelnen Bestandteile oder sog. Moduleinheiten einer erfindungsgemäßen Kraftstoffversorgungsanlage bzw. deren Bauteile oder Komponenten aus beliebigen geeigneten Materialien wie Kunststoffen, Aluminium und/oder Stahl herstellbar. Für Dichtelemente und Schläuche können wie üblich Elastomere zum Einsatz kommen. Eine besonders hohe Qualität sowohl hinsichtlich absoluter Emissionsdichtheit als auch Lebensdauer ist jedoch erzielbar, wenn diese sog. Moduleinheiten vorwiegend in Edelstahl ausgeführt sind.

So kann das Füllrohr aus Edelstahl bestehen, mehrteilig und zusammengeschweißt ausgeführt und mit einem elastischen Ausgleich, bestehend aus einem angeschweißtem Edelstahl-Wellrohr, versehen sein. Auch die tankseitige Verbindung besteht bevorzugt aus Verschraubungselementen aus Edelstahl. Selbstverständlich kann der Füllstutzen eine geeignete Zapfpistolenführung aufweisen und mit einem herkömmlichen manuellen oder auch einem automatischen Tankverschluß versehen sein.

Der Kraftstoffbehälter oder Tank ist bevorzugt zweischalig ausgeführt, d.h. ist aus bevorzugt zwei, jeweils eine sog. Halbschale bildenden Formteilen zusammengesetzt, welche in einem Ziehprozess bevorzugt aus Edelstahlblech hergestellt sind. Diese Formteile bzw. Halbschalen sind dabei jeweils mit einem geeigneten Schweißflansch versehen, so daß diese Formteile im Rahmen des Zusammenbaus des Tanks einfach und dabei absolut dicht zusammengeschweißt werden können. Am Kraftstoffbehälter / Tank vorgesehen ist ggf. ein Anschlußstutzen für das Füllrohr und/oder das sog. Abdampfrohr, über welches das Aktivkohlefilter bzw. der sog. Zwischenspeicher für gasförmige Kraftstoffbestandteile zur Spülung mit Umgebungsluft versorgt werden kann, falls dieses Rohr bzw. diese beiden Rohre lösbar am Tank angeschlossen werden sollen. Für diesen lösbaren Anschluß bietet sich bevorzugt eine geeignete Muffen-Schraubverbindung an. Darüber hinaus sind am Tank geeignete elektrische Anschlüsse vorzusehen, um die im Tank-Innenraum angeordneten elektrischen Komponenten mit Energie versorgen und geeignet ansteuern zu können.

Was die im Tank-Innenraum angeordneten Komponenten betrifft, so sei nochmals ausdrücklich erwähnt, daß für deren Montage keine MontageÖffnungen oder dgl. in der Tankwand benötigt werden, nachdem diese Komponenten im Zug des Zusammenbauprozesses der Tank-Formteile in den Tank-Innenraum eingebaut werden. Bei einem zweischalig, in Form einer Unterschale und Oberschale als verwendete Formteile zusammengesetzten Tank kann bspw. zunächst in der sog. Unterschale ein Schwall- oder Sammeltopf mit der Kraftstoffpumpe angeordnet werden, ferner ein Kraftstoff-Druckregler, ein Kraftstoff-Filter sowie ggf. (eine oder mehrere) benötigte Saugstrahlpumpe(n), bevorzugt um Kraftstoff aus einem Teilraum des Tanks in einen anderen Teilraum zu fördern.

Zusätzlich werden ein sog. Zwischenspeicher für gasförmige Kraftstoffbestandteile (bspw. das übliche Aktivkohlefilter) sowie die hierfür erforderlichen Verbindungsleitungen nach außen (nämlich zum einen die bereits erwähnte Abdampfleitung und zum anderen die zur Brennkraftmaschine führende Spülleitung) im sich bildenden Tank-Innenraum angeordnet. Gleiches gilt für benötigte Rückhalte- u./o. Überlastventile (z.B. das bekannte Roll-Over-Ventil), sowie bezüglich eines Füllstandsgebers.

Auch ein bekanntermaßen erforderlicher(s) Ausgleichsbehälter oder Ausgleichsvolumen wird im Tank-Innenraum angeordnet oder vorgesehen. So kann ein separater (Druck)-Ausgleichsbehälter bspw. auf Stelzen stehend, d.h. sich über Stelzen an der Innenwand der Unterschale abstützend, in den obersten Raum der Oberschale hineinragen. Alternativ kann jedoch auch ein Teil des Volumens oder das gesamte Volumen der im Rahmen des Fertigungsprozesses des Tanks auf die Unterschale aufzusetzenden Oberschale als Ausgleichsraum oder Ausgleichsvolumen genutzt werden. Wie bereits erwähnt wird nach Einbau der vorgesehenen genannten Komponenten die Oberschale mit der Unterschale emissionsdicht verbunden, insbesondere verschweißt. Dabei sei ausdrücklich erwähnt, daß der Tank auch aus mehr als zwei geeigneten Formteilen zusammengesetzt sein kann, die anders als bislang beschrieben geteilt sein können, so bspw. in eine linke und eine rechte Tankhälfte.

Das bereits erwähnte Leitungspaket bzw. die außerhalb des Tanks liegenden Verbindungsleitungen oder Rohre der erfindungsgemäßen Kraftstoffversorgungsanlage können in Edelstahlrohren ausgeführt sein, wobei ein lokaler elastischer Ausgleich mit Edelstahl-Wellrohrstücken oder dgl. vorgesehen sein kann. Die jeweiligen Anschlüsse oder Verbindungsstellen mit dem Tank einerseits und der Kfz.-Brennkraftmaschine andererseits können durch Verschraubungselemente aus Edelstahl bevorzugt mit metallischen Dichtelementen gebildet sein. Vorgesehen sein können Schutzbauteile für die genannten lokalen Wellrohrstücke, sowie ggf. zusätzlich eine Leitungstrennstelle für Reparatur oder Demontage, so bspw. eine metallisch dichte Kegelbördel-Verbindung nach DIN.

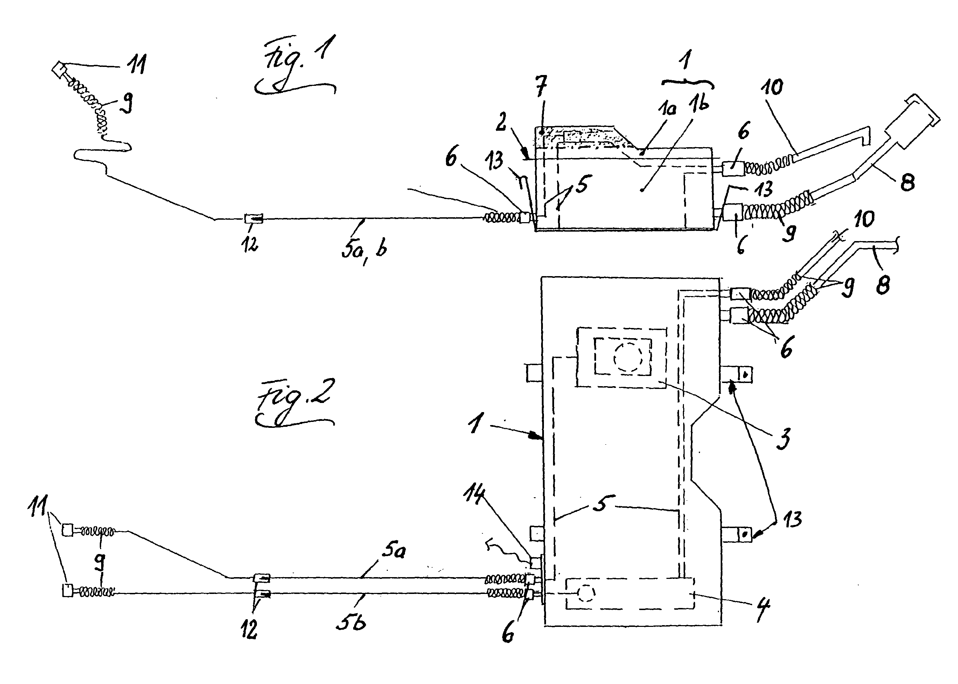

Die beigefügte Prinzipskizze zeigt ein bevorzugtes Ausführungsbeispiel der Erfindung, wobei diese im folgenden kurz erläuterte Kraftstoffversorgungsanlage neben einer sog. Kraftstoff-Vorlaufleitung zur Brennkraftmaschine nur noch eine Aktivkohlefilter-Spülleitung enthält, so daß es sich um ein rücklaufloses Fördersystem handelt. **Figur 1** zeigt dabei eine prinzipielle Seitenansicht der in einem PKW verbauten Kraftstoffversorgungsanlage, während in **Figur 2** eine entsprechende Aufsicht dargestellt ist.

Mit der Bezugsziffer 1 ist ein Tank oder Kraftstoffbehälter bezeichnet, der flüssigen Kraftstoff für eine dem Antrieb eines Kraftfahrzeuges dienende Brennkraftmaschine enthält. Der hier dargestellte Tank 1 ist aus zwei Formteilen 1a, 1b zusammengesetzt, die in Form einer Unterschale 1a sowie einer Oberschale 1b ausgebildet sind. In einer hier horizontal verlaufenden Trennfuge 2 sind diese beiden Formteile 1a, 1b miteinander gasdicht verschweißt. Bevor dies erfolgt, werden jedoch diverse, oben ausführlich erläuterte Komponenten im Tank-Innenraum angeordnet, von denen hier unter der Bezugsziffer 3 eine erste aus einem Schwalltopf, einer Kraftstoffpumpe, einem Kraftstoff-Filter, einem Kraftstoff-Druckregler sowie einem Füllstandsgeber bestehende Einheit dargestellt ist. Eine zweite sog. Komponenten-Einheit ist mit der Bezugsziffer 4 bezeichnet und besteht aus einem Aktivkohlefilter mit Roll-Over-Ventil. Ferner werden im Tank-Innenraum geeignete Verbindungsleitungen 5 zwischen den Einheiten 3 bzw. 4 und in der Tankwand vorgesehenen Anschlußstellen 6 verlegt.

Nachdem die Oberschale 1b, innerhalb derer ein erforderliches Ausgleichsvolumen 7 vorgesehen ist, mit der Unterschale 1a gasdicht verbunden ist, liegt somit ein sog. Kraftstoffbehälter-Modul vor, das neben dem Tank 1 aus den darin eingebauten Komponenten besteht. Mit dem Einbau in das Kraftfahrzeug (Kfz bzw. PKW) kann dieses Kraftstoffbehälter-Modul dann mit den folgenden weiteren Modulen verbunden werden, um die vollständige Kraftstoffversorgungsanlage zu erhalten, wobei noch auf die mit der Bezugsziffer 14 versehene elektrische Anschlußstelle in der Wand des Tanks 1 verwiesen sei, über die die im Tank-Innenraum angeordneten elektrischen oder elektronischen Komponenten geeignet versorgt bzw. angesteuert werden können.

Bei der Montage der Kraftstoffversorgungsanlage im Kraftfahrzeug wird im weiteren ein mit einem Füllstutzen und einem Verschlußdeckel versehenes Füllrohr 8 an die hierfür am Tank 1 vorgesehene Anschlußstelle 6 angeschraubt, wobei zwischen der hierfür vorgesehenen Muffen-Schraubverbindung und einem Rohrabschnitt des Füllrohres 8 noch ein flexibler Wellrohrabschnitt 9 vorgesehen ist. Ein ebensolcher Wellrohrabschnitt 9 befindet sich in der neben dem Füllrohr 8 in vergleichbarer Weise mit dem Tank 1 verbundenen sog. Abdampfleitung 10 für das genannte Aktivkohlefilter, über welche diesem zu Spülzwecken Umgebungsluft zugeführt werden kann.

An die gegenüberliegende Seite des Tanks 1 werden zur figürlich nicht dargestellten Kfz.-Brennkraftmaschine führende Verbindungsleitungen 5a, 5b ebenfalls über Muffen-Schraubverbindungen oder dgl. an die hierfür am Tank 1 vorgesehenen Anschlußstellen 6 angeschlossen. Bei der Verbindungsleitung 5a handelt es sich um die sog. Kraftstoff-Vorlaufleitung, über welche der Kraftstoff der Brennkraftmaschine zugeführt wird, während die Verbindungsleitung 5b die sog. Spülleitung für das Aktivkohlefilter ist, über welche die darin zwischengespeicherten Kraftstoffdämpfe der Brennkraftmaschine zur Verbrennung zugeführt werden. Auch in diesen Verbindungsleitungen 5a, 5b sind nahe den jeweiligen Anschlußstellen 6, 11 (auch die brennkraftmaschinenseitigen Anschlußstellen 11 sind lösbar, bevorzugt in Form einer Schraubverbindung ausgeführt) zum Lage-Toleranzausgleich Wellrohrabschnitte 9 vorgesehen. In diesen Verbindungsleitungen 5a, 5b selbst können auch geeignete Trennstellen 12, bspw. ausgebildet in Form einer herkömmlichen Kegelbördelverbindung, vorgesehen sein.

Nicht dargestellt sind Befestigungsstellen für die Verbindungsleitungen 5 oder das Füllrohr 8 an der Karosserie des Kraftfahrzeuges, während der Tank 1 selbst bspw. über geeignete Spannbänder 13 - bevorzugt ebenso wie der Tank 1 in Edelstahl ausgeführt - an der PKW-Karosserie befestigt ist, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. So können bspw. auch eine oder zwei Montageöffnungen am Tank bzw. in den genannten Formteilen 1a, 1b vorgesehen sein, die dicht verschließbar sind. Stets erhält man mit den wesentlichen Merkmalen eine höhere EmissionsDichtheit des Gesamtsystems und insbesondere auch eine erhöhte Sicherheit gegen Undichtwerden bei einem Fzg.-Crash oder bei vergleichbarer Beanspruchung durch den völlig geschlossenen Tankkörper. Gleichzeitig wird die Montage deutlich vereinfacht, wobei der nunmehr mögliche Entfall von bislang erforderlichen Montageöffnungen im Tank einerseits und in der Fzg.-Karosserie andererseits auch einen Steifigkeitszugewinn zur Folge hat. Insbesondere wird durch die beschriebene Modulbauweise jedoch die Anzahl der im Fahrzeug zu montierenden Leitungsanschlüsse auf ein Minimum reduziert und vorteilhafterweise ist auf besonders einfache Weise auch eine Dichtheitsprüfung der gesamten Kraftstoffversorgungsanlage im Fahrzeug im Einbauzustand möglich.

## Patentansprüche

1. Kraftstoffversorgungsanlage für ein Kraftfahrzeug, mit einem Tank (1) zur Aufnahme von flüssigem Kraftstoff, mit einer darin angeordneten Kraftstoffpumpe mit Schwalltopf, Filter und Füllstandsgeber, sowie mit einem Ausgleichsvolumen (7), einem Zwischenspeicher für gasförmige Kraftstoffbestandteile und den zugehörigen Verbindungsleitungen (5), u.a. auch zu einer mit dem Kraftstoff zu versorgenden Brennkraftmaschine,
**dadurch gekennzeichnet, daß** der Tank (1) aus zumindest zwei gasdicht unlösbar miteinander verbundenen Formteilen (1a, 1b) zusammengesetzt ist, woran die Verbindungsleitung(en) (5) zur Brennkraftmaschine lösbar angeschlossen sind, während die weiteren genannten Elemente vor dem endgültigen Zusammenfügen der Formteile (1a, 1b) in den dadurch gebildeten Tank-Innenraum eingebaut sind.

2. Kraftstoffversorgungsanlage nach Anspruch 1,
**dadurch gekennzeichnet, daß** der Tank (1) aus zwei im wesentlichen halbschalenförmig ausgebildeten Formteilen (1a, 1b) zusammengesetzt ist.

3. Kraftstoffversorgungsanlage nach Anspruch 1 oder 2,
**dadurch gekennzeichnet, daß** neben den genannten Elementen ein Druckregler und/oder eine Saugstrahlpumpe und/oder ein Rückhalteoder Überlastventil im Tankinnenraum angeordnet ist.

4. Kraftstoffversorgungsanlage nach einem der vorangegangenen Ansprüche,
**dadurch gekennzeichnet, daß** sich das Ausgleichsvolumen (7) im Oberschalen-Formteil (1b) des Tanks (1) befindet und am Unterschalen-Formteil (1a) abgestützt ist.

5. Kraftstoffversorgungsanlage nach einem der vorangegangenen Ansprüche,
**dadurch gekennzeichnet, daß** ein Tank-Füllrohr (8) lösbar am Tank (1) anschließbar oder unlösbar mit einem der Tank-Formteile (1a, 1b) verbunden ist.

6. Kraftstoffversorgungsanlage nach einem der vorangegangenen Ansprüche,
**dadurch gekennzeichnet, daß** die lösbar an den Tank (1) anschließbare(n) Verbindungsleitung(en) (5, 5a, 5b) und/oder Rohr(e) (8) mit einer Vorrichtung zum Ausgleich von geringfügigen Lageänderungen (Wellrohrabschnitt 9) versehen ist/sind.

7. Kraftstoffversorgungsanlage nach einem der vorangegangenen Ansprüche,
dadurch gekennzeichent, daß der Tank (1) und/oder das Füllrohr (8) und/oder die Verbindungsleitungen (5, 5a, 5b) in Edelstahl ausgeführt sind.
